# EUROPEAN PATENT SPECIFICATION

(11) **EP 4 246 270 B1**
(45) Date of publication and mention of the grant of the patent: **02.10.2024**
(21) Application number: 22162701.1
(22) Date of filing: 17.03.2022
(51) Int. Cl.: G05D 1/00, E21F 17/00, E21F 13/02, E21C 35/24

(54) **COORDINATE TRANSFORMATION FOR MINING VEHICLE POSITIONING**
KOORDINATENTRANSFORMATION ZUR POSITIONIERUNG VON BERGBAUFAHRZEUGEN
TRANSFORMATION DE COORDONNÉES POUR LE POSITIONNEMENT DE VÉHICULES MINIERS

(43) Date of publication of application: 20.09.2023
(73) Proprietor: Sandvik Mining and Construction Oy, 33330 Tampere (FI)
(72) Inventor: HYYPPÄ, Samuel, 33311 Tampere (FI); HÄMÄLÄINEN, Jyrki, 33311 Tampere (FI); SIIVONEN, Lauri, 33311 Tampere (FI)
(74) Representative: Sandvik

(56) References cited:
- EP-B1- 3 094 807
- US-B2- 8 453 759

## Description

### FIELD

The present invention relates to positioning of mining vehicles, and further to arranging coordinate transformation for positioning mining vehicles, which may be autonomously performing a drive order or task at a worksite.

### BACKGROUND

Mining or construction excavation worksites, such as underground hard rock or soft rock mines, may comprise areas for automated operation of mining vehicles, such as load and/or haul machines and drilling rigs. Such mining vehicles may comprise an unmanned vehicle, for example, remotely controlled from a control room, or a manned vehicle, such as a vehicle operated by an operator in a cabin of the vehicle. Mining vehicles may be configured to perform at least some of tasks autonomously. An automated mining vehicle operating in an automatic mode may be configured to operate independently.

A worksite and autonomously operating vehicles at the worksite may comprise a large number of mobile and fixed sensors continuously collecting data related to or affecting operations in the mine operations. Such data may be referred to as mining operations data. For example, the mining operations data may comprise vehicle operations status data, such as speed, position at the worksite, motor parameters, load, etc., and/or environment data, such as temperature, air condition, etc. The data may be transferred to a data processing system, which may be configured to provide a mine operations control system. The system may comprise a user interface for a user (may also be referred to as operator) of the system. Positions of vehicles performing their drive orders may be indicated for the operator monitoring the vehicles and manually controlling a vehicle when needed. Worksites may be very large and complex with a fleet of simultaneously operating vehicles monitored by the operator.

Mining vehicles using different mapping or positioning systems may be operated at the same worksite. For example, some mining vehicles may apply a two-dimensional (2D) based map and positioning system, whereas some other mining vehicles may apply a three-dimensional (3D) based map and positioning system. A supervisory system needs to have a real-time location of each vehicle at the monitored worksite area.

US8453759 discloses a method of determining a direction of a drilling pattern in a tunnel curve calculation to be executed in a control unit of a rock drilling rig, a storage device including software product implementing the method and a rock drilling rig. Tunnel line of a tunnel to be excavated is determined. Location of a drilling site on the tunnel line is communicated to the control unit and a navigation plane of the drilling pattern is positioned on the tunnel line. Start point of a round is positioned on the tunnel line and length of the round is provided. End point of the round is positioned at a distance corresponding with the length of the round from the start point and a coordinate system of the drilling pattern is directed so one of its axes points from the start point to the end point. Finally, different coordinate systems are transformed.

EP3094807 discloses a mine control system for monitoring mine operations. The system comprises several mine vehicles provided with on-board monitoring means. Point cloud data is transmitted from the mine vehicle to a mine control unit, which is provided with a mine plan. The mine control unit is configured to compare the received point cloud data with the mine plan and it determines the current state of the mine relative to the mine plan on the basis of the point cloud data.

### SUMMARY

The invention is defined by the features of the independent claims. Some specific embodiments are defined in the dependent claims.

According to a first aspect of the present invention, there is provided an apparatus, the apparatus comprising means for or configured to cause the apparatus at least to: detect a first position of a mining vehicle with reference to a first worksite model, receive information on a plurality of transformation matrices associated with the first worksite model, select a transformation matrix associated with the first worksite model based on the first position of the mining vehicle, perform, based on the selected transformation matrix, a coordinate transformation from input coordinates indicative of a second position of the mining vehicle in the first worksite model to transformed coordinates of a second worksite model, and provide the transformed coordinates to represent the second position of the mining vehicle for performing mining automation control by a control device of a mining automation system or a control unit of a mining vehicle based on the second worksite model.

The means comprises one or more processors and memory comprising instructions, when executed by the one or more processors, cause the apparatus to perform the aforementioned steps.

According to a second aspect of the present invention, there is provided a method for mining vehicle positioning, the method comprising: detecting a first position of a mining vehicle with reference to a first worksite model, receiving information on a plurality of transformation matrices associated with the first worksite model, selecting a transformation matrix associated with the first worksite model based on the first position of the mining vehicle, performing, based on the selected transformation matrix, a coordinate transformation from input coordinates indicative of a second position of the mining vehicle in the first worksite model to transformed coordinates of a second worksite model, and providing the transformed coordinates to represent the second position of the mining vehicle for performing mining automation control by a control device of a mining automation system or a control unit of a mining vehicle based on the second worksite mode.

According to a third aspect, there is provided a computer program comprising computer program code configured to, when executed in a data processing apparatus, cause the apparatus to perform the method or an embodiment thereof.

### BRIEF DESCRIPTION OF THE DRAWINGS

FIGURE 1 illustrates an example of an example of a mining worksite;
FIGURE 2 to 4 describe methods according to at least some embodiments;
FIGURE 5a to 5e illustrate processing of worksite models;
FIGURE 6 illustrates an example system according to at least some embodiments; and
FIGURE 7 illustrates an example apparatus capable of supporting at least some embodiments of the present invention.

### EMBODIMENTS

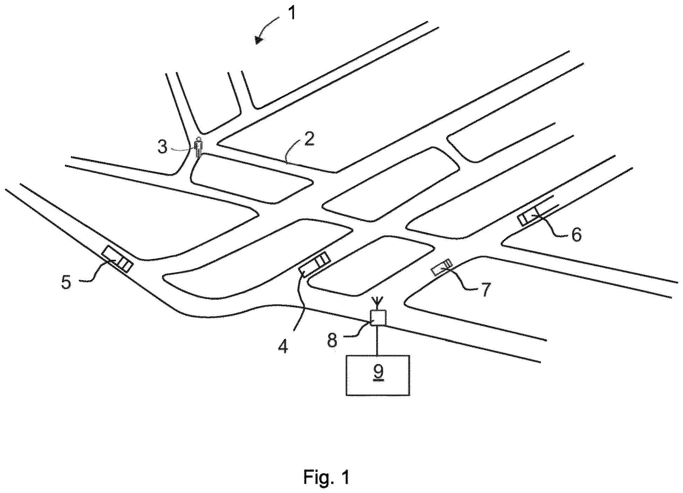

Fig. 1 illustrates a simplified example of a worksite 1, in the present example an underground worksite comprising a network 2 of underground tunnels. A plurality of mobile objects, such as persons or pedestrians 3 and/or mining vehicles 4, 5, 6, 7, below also referred to as vehicles, may be present in and move between different areas or operation zones of the worksite 1. However, it is to be appreciated that application of the present features is not limited to underground worksites.

The worksite may comprise an ore mine or a construction site, such as a railway or road tunnel site. The mining vehicle 4-7 may be any type of mining vehicle suitable to be used at mining and/or construction worksites, such as lorries, dumpers, vans, mobile rock drilling or cutting rigs, mobile reinforcement machines, load and haul devices (LHDs), and bucket loaders or other kinds of mobile work machines which may be used in different kinds of excavation worksites. The mining vehicle may be an automated work machine, which in its autonomous operating mode may operate/drive independently without requiring continuous user control but which may be taken under external control during states of emergencies, for example.

The mining vehicle 4-7 may be unmanned. Thus, the user interface may be remote from the vehicle and the vehicle may be remotely controlled by an operator at the worksite, in a control room at the worksite area, or even long distance away from the worksite area via communications network(s). A control unit outside the vehicle, for example, in a control system 9 may be configured to perform at least some of the below illustrated features. However, in some embodiments at least some of the below features are performed on-board the vehicle.

The worksite 1 comprises a communications system, such as a wireless access system comprising a wireless local area network (WLAN) and/or a cellular communications network (for example a 4G, 5G or another generation cellular network), comprising a plurality of wireless access nodes 8, such as WLAN access points or cellular base stations. The access nodes 8 may be configured to communicate with wireless communications units comprised by the mining vehicles or carried by the pedestrians and with further communications devices (not shown). The access node may comprise or be connected to network device(s) configured to facilitate communications with the control system 9, which may be on-site (underground or above-ground) and/or remote from the worksite.

The control system 9 may comprise or be connected to a further network(s) and/or data processing system(s), such a worksite management system, a cloud service, a data analytics device/system, an intermediate communications network, such as the internet, etc. The control system may comprise or be connected to further device(s) or control unit(s), such as a handheld user unit, a vehicle unit, a worksite management device/system, a remote control and/or monitoring device/system, data analytics device/system, sensor system/device, or the like.

The control system 9 may comprise at least one control device, such as a server and/or operator control unit, configured to perform at least some mining operations control related features. For example, the control device of the control system 9 may be configured to provide a user interface (UI) for an operator to remotely monitor and, when needed, control automatic operation operations of the mining vehicles 4-7. The control device may be configured to assign work tasks for a fleet of vehicles. The control device may be configured to update and/or monitor mining vehicle task performance and status based on information received from the vehicles. The control device may be configured to update mining vehicle positions on a graphical UI (GUI) displayed for the operator.

The worksite 1 may further comprise various other types of mine operations devices connectable to the control system 9, for example, via the access node 8, not further illustrated in Fig. 1. Examples of such further mine operations devices include various devices for power supply, ventilation, air condition analysis, safety, communications, and other automation devices. For example, the worksite may comprise a passage control system comprising passage control units (PCU) separating operation zones, some of which may be set-up for autonomously operating mining vehicles. The passage control system and associated PCUs may be configured to allow or prevent movement of one or more mining vehicles and/or pedestrians between zones.

Apparatuses of the worksite, such as the control device(s) of the control system 9 and the mining vehicles 4-7, may be configured to store and use at least one worksite model representing current state and/or target state of the worksite environment. The worksite model may be an environment model or a map. The worksite model may be a 2D model or a 3D model indicative of surface profiles and obstacles at the worksite, at an area operated by mining vehicles, for example. In the case of an underground worksite, the worksite model may be a tunnel model indicative of tunnel profiles. In some embodiments, the control system 9 is configured to store a 3D (tunnel) model of the underground worksite, illustrating floors, walls, and ceilings of the tunnel network 2. In another example embodiment, a mining vehicle 4-7 and/or the control system 9 is configured to apply a 2D worksite model, for monitoring position of the mining vehicle based on environment scanning by a 2D scanner comprised by the mining vehicle.

In some embodiments, the worksite model comprises point cloud data generated on the basis of scanning. A point cloud comprises a collection of data points defined by a given coordinates system. In a 3D coordinate system, for example, a point cloud may define the profile of the underground tunnel network 2. The 3D model may comprise or be formed based on point cloud data generated on the basis of scanning the tunnel system. The control device may be configured to generate and/or update the worksite model, for example, based on point cloud data received from mining vehicles or other apparatuses comprising an environment scanning device. For navigation purposes, it is possible to generate a 3D model by combining depth measurements from a high-density scanner, such as a laser-induced detection and ranging (LIDAR) device.

The worksite model may be stored in a database accessible by one or more modules of a computing apparatus, such as a tunnel model processing module, a user interface or visualizer module, a route planning module, and/or a positioning service module. In other embodiments, the worksite model may be a design model or may be generated on the basis of a design model. For example, the design model may be a computer-aided design (CAD) model, created by a mine designing software. In another example, the design model is a 3D model created on the basis of tunnel lines and profiles designed in a drill and blast design software, such as iSURE^{®}. Apparatuses performing worksite model processing, such as the control device(s) of the control system 9 and the mining vehicle(s), may be configured to process a measured model and/or a planned model of the worksite.

In complex 3D environments, such as underground mines, using the full 3D model of the tunnel system may be too complex and resource consuming. The worksite model may thus be a partial model of the worksite, such as a partial 3D point cloud model of the worksite. For example, more efficient route calculation or location tracking of vehicles or pedestrians may be achieved by using a worksite model that only comprises the floor of the mine, possibly with attributes associated with some or all of the floor points. The term floor model refers generally to a model comprising a set of points indicative of the tunnel floor at least in a horizontal plane, such as 2D or x, y coordinates. Such points may also be referred to as floor points. An example of a floor model is a point cloud model of the tunnel network 2 comprising a sub-set of points extracted from 3D point cloud data for representing the floors of the tunnel. The floor model may be applied as a map for mobile object movement tracking, and the floor points may be considered as map points. The floor model may also comprise a vertical plane, such as height or z coordinate data and/or supplementary data for at least some of the floor points. For example, the floor model may comprise information of obstacles or tunnel walls for 1-2 meters above the floor level. Thus, the tunnel model applied for worksite and route plan visualization may comprise only a part of the full 3D model, such as the floor model defining floor level points and possibly also walls (or wall points).

In some embodiments, some apparatuses, such as some of the mining vehicles 4-7, may be configured to store and use a 2D worksite model. For example, an autonomous navigation system of some of the vehicles 4-7 may comprise a 2D scanner and 2D tunnel model (as the worksite model) and the position of the mine vehicle is defined based on 2D scanning data and the 2D tunnel model.

A driving plan, a route plan or a drive order, may define a route to be driven by a vehicle 4-7 and may be used as an input for automatic control of the vehicle. The plan may define a start point, an end point, and a set of route points for the automatic drive. A route point entry may comprise at least 2D coordinates of the route point, but it may also comprise a vertical coordinate or vertical layer indication. Route point entries may also comprise further information, such as speed information or obstacle and/or safety control related information. The plan and included route point positions may be defined on the basis of a teach drive performed by manually driving the vehicle or computationally on the basis of operator input, the worksite model and vehicle dimensions information. The plan may be sent via a wired or wireless connection to, or otherwise loaded to the vehicle, to a memory of the vehicle for access by a control unit of the vehicle.

A mining vehicle, such as the vehicle 4, may be provided with an obstacle detection function or unit, which may be part of a collision avoidance or prevention system. The obstacle detection function may be configured to perform collision examination based on scanning data received from at least one scanner configured to perform scanning of the environment of the vehicle. For example, one scanner may cover a rear portion of the vehicle and another scanner may cover a front section of the vehicle by directional beams.

In some embodiments, the scanner is a 3D scanner, in which case 3D scanning data, such as point cloud data is produced. The scanner may be a laser scanner or another type of sensor device, such as a 4D or another type of radar, appropriate for determining distances to obstacles for the vehicle. The obstacle detection function may apply one or more obstacle detection or safety areas around the vehicle. For example, obstacles detected within a preconfigured or dynamically adapted distance from the mining vehicle are determined as obstacles causing a control action for the mining vehicle. If an object is detected as an obstacle in the area, the vehicle may be stopped.

In some embodiments, the mining vehicle 4-7 is configured to, on the basis of processing scanning data from at least one scanner and the worksite model, detect a position and orientation of the vehicle and one or more further elements thereof. For example, the mining vehicle 4-7 is configured to determine a position of the scanner, or a leading edge of a bucket of the vehicle further based on vehicle element kinematics parameter data. A control unit in the vehicle may be configured to compare scanned profile (scanned during operation of the mining vehicle) to a reference profile stored in the worksite model. The control unit may be configured to position the vehicle on the basis of finding a match between the scanned tunnel profile and the reference tunnel profile. The control unit may be configured to correct positioning of the vehicle by dead-reckoning on the basis of the position determined based on the scanning. The vehicle may comprise a simultaneous localization and mapping (SLAM) unit configured to both position the vehicle and (augment) map the environment on the basis of (2D or 3D) scanning information while the vehicle is driving. The vehicle or the control system 9 may be configured to update the worksite model based on the scanning information.

There are now provided improvements for facilitating improved monitoring, control and/or co-operation in a mining automation system. In particular, improvements are provided for a system comprising devices applying different worksite models, to provide mining vehicle position information between such devices.

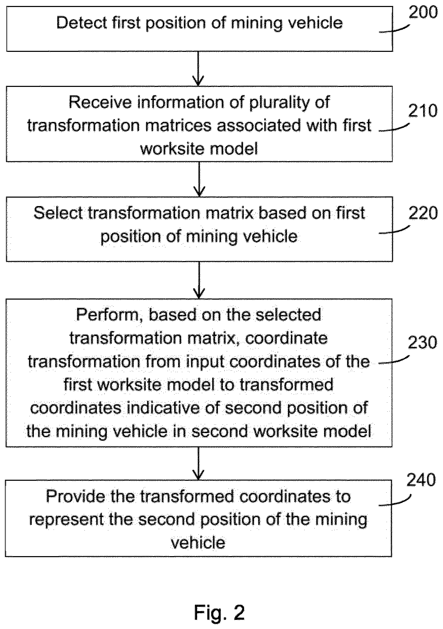

Fig. 2 illustrates a method according to some embodiments. A control system or apparatus, such as a control device of the control system 9 or the vehicle 4-7, and at least one processing unit therefor, may be configured to perform the method. The apparatus may be, for example, a server, a worksite operator, designer, or controller workstation, a mobile control unit, such as a mobile cellular device or other type of mobile communications device, a vehicle on-board control device, or other kind of appropriately configured data processing device. The method may be a computer-implemented method.

The method comprises detecting 200 a first position of a mining vehicle with reference to a first worksite model. Block 210 comprises receiving a plurality of transformation matrices with a first worksite model. Block 220 comprises selecting a transformation matrix based on the first position of the mining vehicle. Block 230 comprises performing a coordinate transformation from input coordinates of the first worksite model to transformed coordinates of a second worksite model. The coordinate transformation is performed based on the selected transformation matrix. The input coordinates are indicative of a second position of the mining vehicle in the first worksite model. Block 240 comprises providing the transformed coordinates to represent the second position of the mining vehicle.

The transformed coordinates may be transmitted or otherwise provided in block 240 for performing mining automation control based on the second worksite model. For example, the position may be transmitted in block 240 to a monitoring unit or module tracking position of the mining vehicle in the second worksite model. The mining vehicle may be an autonomously driving vehicle, such as one of the vehicles 4 to 7, and the position may be provided to control and/or monitor autonomous driving of the mobile mining vehicle.

The first position may be a current position of the mining vehicle applied for selecting the transformation matrix. Block 200 may be entered at the start of an autonomous driving task or during such driving task. The first position of the mining vehicle in block 200 may be defined in coordinates of the first worksite model. The second position may be a current position of the mining vehicle or a target position of the mining vehicle. The second position is within a worksite model portion associated with the transformation matrix selected in block 220, and thus close (enough) to the first position. The apparatus may be thus configured to use the selected transformation matrix for a number of (second) positions of the vehicle, and block 220 does not need to be repeated for each new position of the vehicle. In some cases also the first position needs to be represented in a system applying the second worksite model, whereby the first position and the second position may comprise equally valid values of the same location, but for other purposes. The input coordinates in block 230 may thus be considered as an input position of the mining vehicle determined based on the first worksite model. The transformed coordinates may be indicative of the input position of the mining vehicle in the second worksite model.

The method facilitates to improve co-operation and compatibility with vehicles applying different positioning reference systems, for example, for vehicles of older and newer generations or for vehicles of different manufacturers. Applying location-specific transformation matrices facilitates to have further improved accuracy for the coordinate transformation. For example, the position information may be provided in block 230 to the control device of the system 9 and applied for monitoring positions of the mining vehicles 4 and 5 at the worksite 1. Some other mining vehicles 6 and 7 may be configured to directly use the second worksite model for determining their position (in which case the method is not needed), apply the first worksite model, or apply even a further, third worksite model, for which the method and transformation matrices specific to the third worksite model may be applied.

The transformation matrix may refer generally to a transformation or conversion function to convert position information between two different worksite models or maps. The worksite model may refer to an environment model or map representing the worksite, such as a 2D or a 3D tunnel model. It is to be noted that the worksite model does not have to be a complete representation of the environment, but it may be a 2D model or a partial 3D model, such as the floor model discussed above. A further example of a specific worksite model is a drivability model or map, which may be a 2D or 3D environment model comprising further augmented drivability data. For example, some of floor points of a floor model may comprise drivability data. For example, drivability data may comprise vehicle specific drivability data, may indicate one or more points or portions of the model traversable/drivable by the mining vehicle, and/or comprise vehicle control parameters, such as speed.

There may be further blocks in the method, some example embodiments being illustrated below. For example, the apparatus performing the method may be configured to receive the input coordinates between blocks 220 and 230, or already before block 220. It is also to be appreciated that the apparatus may be configured to receive the information of the transformation matrices before detecting the (first) position of the mining vehicle.

The first position detected in block 200 and the second position may be a current position of a mining vehicle at a time instant. For example, the first position may comprise a position of a mining vehicle at a first time instance and the second position may comprise a position of the mining vehicle at a second time instance. Block 200 may comprise determining the first position based on scanning data and the first worksite model, or receiving the first position from another unit, such as a positioning unit of the vehicle. Similarly, the apparatus may be configured to determine or receive the second position.

In some embodiments, in which the coordinate transformation is used to provide position information to control the mining vehicle using the second worksite model, the first position and the second position may be planned target positions of the mining vehicle. Such a target position may be an intermediate or end point of a route planned for the mining vehicle in the first worksite model, for example. For example, worksite fleet route planning may be performed on the basis of a 3D worksite model, which may be applied at the control system 9 of the mining automation system and by some of the vehicles of the fleet. However, some, for example older, vehicles may apply a 2D model in their autonomous driving control. The control system 9 may be configured to apply the method of Fig. 2 to transform a target position from 3D coordinates of the 3D worksite model to 2D coordinates of the 2D model supported by such vehicles.

The input coordinates may be of the same reference system as the transformed coordinates, such as coordinate values of a global coordinate system. Alternatively, the input coordinates and the transformed coordinates may be of different reference systems. For example, the input coordinates may be coordinate values of the global coordinate system, and the transformed coordinates may be coordinate values of a local reference system, such as a local coordinate system of the mining vehicle (or vice versa). The apparatus may be configured to provide the position in block 230 to position the mining vehicle in a worksite reference system, which may be in the global coordinate system.

The apparatus, configured to perform the method, may be configured to provide the position to indicate the position of the vehicle in a mining automation monitoring system and/or graphical user interface (GUI) view. The apparatus may be configured to, in addition to or instead of the mining vehicle position monitoring, provide the position for at least one of route planning, mining vehicle driving or mining task control, collision prevention, obstacle detection, and/or steering control for the mining vehicle operating autonomously. The (second) position of the mining vehicle in the transformed coordinates may be applied after block 240 for such operations for the mining vehicle and/or other mining vehicles at the worksite. For example, on-line route planning or collision avoidance function (applying the second worksite model) of the control system 9 or the vehicle 4 may receive and use continuously updated position information of the vehicle 7 (configured to apply the first worksite model and share the position for other devices at the worksite).

In an example embodiment, a control device of a mining automation system, such as the control device of the control system 9, is configured to perform the method and receive the input coordinates. The input coordinates may be indicative of a current or target position of the mining vehicle in the first worksite model. The control device may be configured to receive the input coordinates from the mining vehicle, or another device or unit controlling the vehicle or positioning the vehicle. The control device may be configured to select the transformation matrix based on a (first) position received from the vehicle, in some embodiments based on the received input coordinates, or based on earlier position information or expected position of the mining vehicle. In some embodiments, when the input coordinates are indicative of the current (second) position of the mining vehicle in the first worksite model (which may be a local model applied by the vehicle), the control device may be configured to obtain the position of the vehicle within the second worksite model applied by the control system 9 by the method. The control device may be configured to generate a GUI view of the worksite model or map comprising an indicator of the mining vehicle positioned in the model according to the transformed coordinates, along with other objects being monitored, for example. These steps may be repeated and the position, based on the first/local worksite model, may be continuously updated in the GUI view.

The control device may further comprise a vehicle control module or unit configured to generate control commands to a vehicle on-board control system on the basis of associated user inputs after displaying an indicator of the mining vehicle based on the transformed coordinates. The control device may be configured to generate and transmit control command(s) to one or more vehicles to control the vehicle(s) performing an autonomous driving task or order, to select a new route, stop, decelerate, or accelerate, for example. The control device may be configured to generate the control command(s) on the basis of received control input(s) from the operator via an input device, or based on autonomous control operations definition procedure based on the transformed coordinates.

In some other example embodiments, the mining vehicle 4-7, and a control unit thereof, is configured to perform the method. The mining vehicle may be configured to define the input coordinates based on positioning the mining vehicle in the first worksite model during driving of the mining vehicle. The mining vehicle may be configured to transmit transformed coordinates to the control device in or after block 240.

In some embodiments, the mining vehicle 4-7 may be configured to receive the input coordinates from the control system 9. The input coordinates may indicate one or more target positions for the mining vehicle (or a reference element thereof). Such target positions may include one or more of a start point, route point(s) and an end point of a route for autonomous driving, for example. However, it will be appreciated that various other position information for controlling operation of the mining vehicle may be similarly provided to the mining vehicle for block 220, such as intermediate route point positions associated with a specific driving control action for the mining vehicle. The mining vehicle may be configured to transform the target position values into coordinate values of the (second) worksite model used locally for controlling the mining vehicle. The mining vehicle may be configured to control autonomous driving of the vehicle based on the transformed coordinates and the second worksite model. For example, the transformed coordinates may be used for one or more of route planning, mining vehicle driving or mining task control, collision prevention, obstacle detection, and steering control, applying the second worksite model.

The apparatus performing the method of Fig. 2, or another apparatus, may be configured to associate the transformation matrices with the first worksite model. This may be performed in or before block 210. The apparatus may be configured to identify, for each of the matrices, a portion of the worksite represented by the first worksite model for which the respective transformation matrix is to be used. Each of the transformation matrices may thus be associated with a reference worksite portion or worksite area. Each of the transformation matrices may be associated with at least one reference position, such as a route point for the mining vehicle. The transformation matrix may be associated with an area or volume of the worksite, for example, a set of reference positions. For example, a transformation matrix may be associated with a route segment comprising a set of route points. The apparatus may be configured to store a mapping table, or other type data record indicative of the association. For example, a mapping table may store transformation matrix identifiers and associated route point or route segment identifiers. In another example, the indication of the association is stored in connection with the respective transformation matrix, for example as part of a data record storing transformation matrix.

The apparatus may be configured to select 220 the transformation matrix based on received (first) position of the mining vehicle in coordinates of the first worksite model. The apparatus may be configured to repeat the blocks 220 to 240 in response to receiving new mining vehicle position data, to ensure that an appropriate transformation matrix is applied for the coordinate transformation to represent the updated (current) position in the second worksite model.

The apparatus may be configured to, after providing 240 the second position of the mining vehicle in transformed coordinates, receive or define an updated position of the mining vehicle in the first worksite model. The apparatus may be configured to perform a check routine to detect if a trigger to change the transformation matrix is detected.

The check routine may comprise comparing the updated position with position information associated with transformation matrices of the set. For example, the check routine may comprise determining if the mining vehicle is now closer to a reference point or area associated with another transformation matrix (than a reference point or area associated with the currently applied transformation matrix). The apparatus may be configured to determine distances between the position of the mining vehicle and reference positions of the transformation matrices, and select the transformation matrix associated with a reference position closest to the position of the mining vehicle. The transformation matrix may be selected based on distances between the position of the mining vehicle and reference positions. It is to be noted that the selection in block 220 based on the first position may be performed similarly. The apparatus may be configured to, upon detecting the trigger to change the transformation matrix based on the updated position of the mining vehicle, select a new transformation matrix based on the updated position of the mining vehicle.

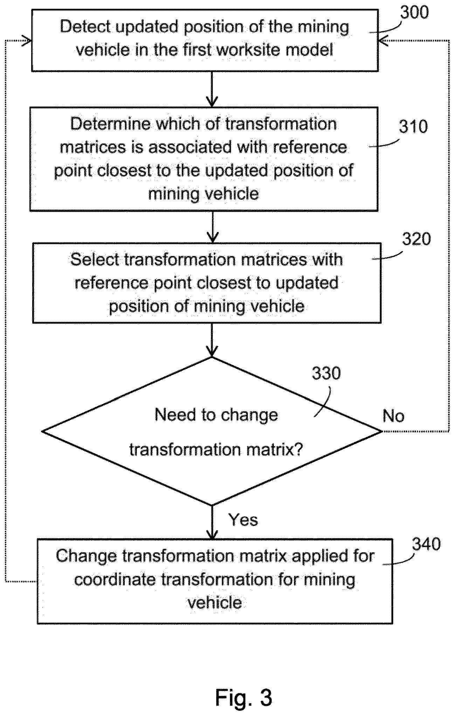

The apparatus may be configured to perform the method of Fig. 3, illustrating an example of such a check routine. Block 300 comprises detecting an updated (or third) position of the mining vehicle in the first worksite model. Depending on the applying apparatus, block 300 may comprise receiving the position information from the mining vehicle or a positioning unit of the mining vehicle, for example. Block 300 may be entered after block 210, before or as part of block 220.

Block 310 comprises determining which of the plurality of transformation matrices is associated with a reference position closest to the position of the mining vehicle, or which of the plurality of transformation matrices is associated with a reference worksite portion or area in which the position of the mining vehicle belongs to. Block 320 comprises selecting the transformation matrix with a reference point closest to the position of the mining vehicle, for example, of the route or worksite segment in which the mining vehicle is currently located. Alternatively, block 320 may comprise selecting the transformation matrix associated with the reference worksite portion or area in which the position of the mining vehicle belongs to.

Block 330 comprises checking if there is a need to change the applied transformation matrix. For example, checking may comprise determining whether the selected transformation matrix is other than the currently applied transformation matrix. If yes, the applied transformation matrix is changed 340 and the newly selected transformation matrix is applied for coordinate transformation for the mining vehicle. In an example embodiment, the apparatus may be configured to consider the movement direction of the mining vehicle and select a transformation matrix associated with a reference point or area which the mining vehicle is approaching and which will be the closest, for example, within a predefined time period.

The apparatus performing the method of Fig. 2, or another apparatus, may be configured to generate the plurality of transformation matrices to provide the coordinate transformation from the first worksite model to the second worksite model. The apparatus may be configured to, instead of or in addition to using a predefined set of transformation matrices, generate the transformation matrix upon a need to provide position information of the mining vehicle in transformed coordinates of the second worksite model, based on the (current or target) position of the mining vehicle.

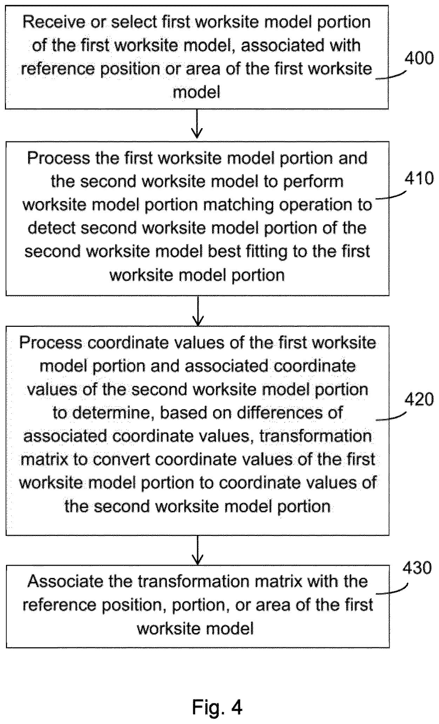

In an example embodiment, the apparatus may be configured to generate a transformation matrix, which may be applied in the method of Fig. 2, by performing the method illustrated in connection with Fig. 4, comprising:
- receiving or selecting 400 a first worksite model portion of the first worksite model, associated with a reference position or area of the first worksite model,
- processing 410 the first worksite model portion and the second worksite model to perform worksite model portion matching operation to detect a second worksite model portion of the second worksite model best fitting to the first worksite model portion,
- processing 420 coordinate values of the first worksite model portion and associated coordinate values of the second worksite model portion. The processing is performed to determine, based on differences of associated coordinate values, a transformation matrix from the first worksite model portion to the second worksite model portion. The transformation matrix may be adapted to convert coordinate values in a first coordinate system of the first worksite model to coordinate values in a second coordinate system of the second worksite model, and
- associating 430 the transformation matrix with the reference position, portion, or area of the first worksite model.

For example, in case of the worksite models comprising point cloud data, a point cloud pattern search algorithm may be performed in block 410 to identify patterns and find matching patterns in the first worksite model (point cloud) data portion and the second worksite model point cloud data. Performing the matching may comprise aligning or fitting model portions represented by the point cloud data portions, in order to identify best matching portions representing the same surface area, for example, tunnel walls and roof around the mining vehicle. An algorithm performing the point cloud matching operation may be configured with rule(s) defining a required/minimum matching ratio in order to identify candidate point cloud portions to be matching.

Since in many cases there are overlapping portions in worksite, a 2D worksite model may comprise or be associated with information on associated heights of modelled worksite portions. For example, overlapping worksite portions may be separated into separate sub-models, which may also be referred to as levels. The sub-models may have individual identifiers with the complete 2D model. Transformation matrix information may comprise information of a sub-model or level into which a set of 3D coordinate values belong. Such information of a sub-model or level may be obtained in block 420 and included in the transformation matrix information in addition to a 4x4 transformation matrix, for example. Obtaining 2D to 3D conversion information of the height level of the vehicle may be adequate to position the vehicle in a 3D underground tunnel model, for example.

The apparatus may be configured to generate a set of reference points, such as a reference point array, based on the (first/source) worksite model, such as the 3D model. The apparatus may be configured to store the reference points as part of the worksite model. The apparatus may be configured to process each reference point of the set to generate a transformation matrix for each reference point. The apparatus may generate a 2D profile or virtual scan at each reference point of point cloud data of the 3D model, for example in block 400. The apparatus may be configured to then match the 2D profile or virtual scan with a 2D sub-model (of the second worksite model), for example in block 410. This may be performed by Houg transform, for example. In another example embodiment, image recognition and image portion alignment may be used.

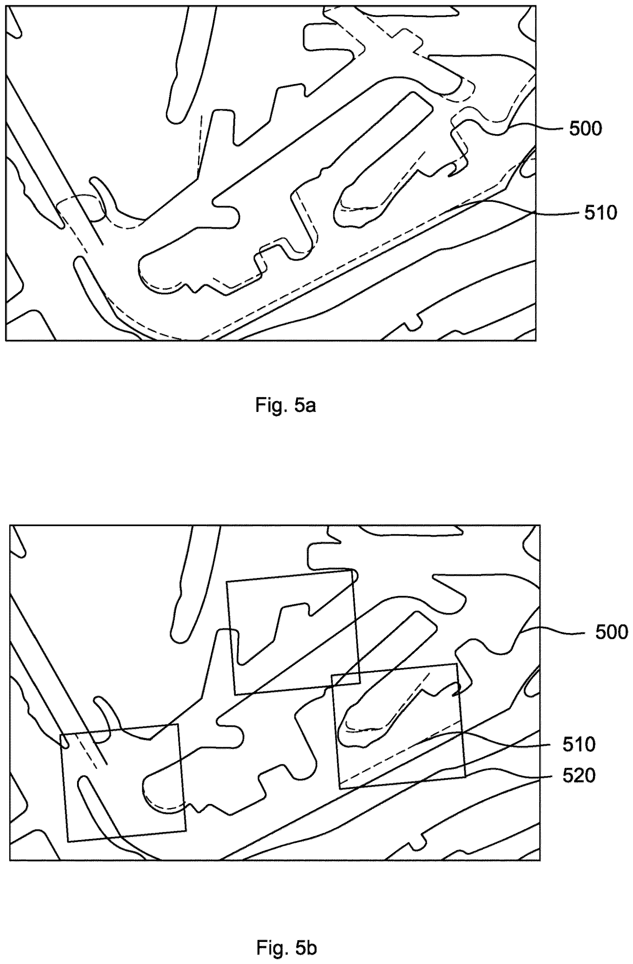

With reference to examples of Figs. 5a to 5e, there is now described an example procedure, which the apparatus may be configured to perform, of processing the first worksite model and the second worksite model, for generating the transformation matrix. The apparatus may be configured to position and orientate the worksite models substantially on top of each other. This may be preceded with selecting (sub-)portions of the worksite models based on the position of the mining vehicle, and then processing the selected portions. This step may be performed based on pattern matching, and positioning the models on top of the identified similar patterns, for example. In an example embodiment, a floor model is extracted from the complete 3D point cloud model and used for matching with the 2D model.

Fig. 5a illustrates, in a simplified 2D illustration, point cloud data of a 3D model, indicative of a tunnel line 500. A 2D model indicative of a tunnel wall profile is illustrated by a set of points 510, and the models are positioned on top of each other.

As illustrated in Fig. 5b, the procedure may proceed to define segments 520, in some embodiments in the first worksite model, such as a 2D tunnel model in the present example. For example, a trajectory or route points, defined in or based on the first worksite model, may be applied as a basis for generating the segments, with an interval of a predefined distance.

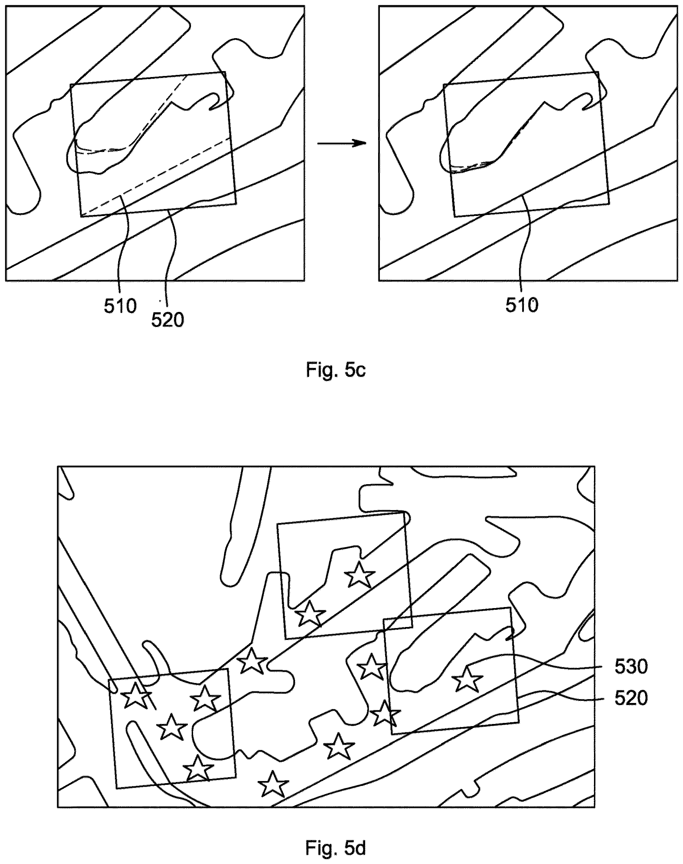

As illustrated in Fig. 5c, the procedure may proceed to further position the first worksite model portion and the second worksite model portions on top of each other as accurately as possible, as illustrated in the image on the right side. For example, the 2D profile or virtual scan obtained of the 3D model at a reference point and the 2D sub-model illustrated above may be matched. The procedure may then proceed to calculate, for each reference point, a transformation for the trajectory point(s) towards the first worksite model. Thus, with the transformation, the profiles match as closely as possible.

As illustrated in Fig. 5d, the procedure may proceed to produce a set of transformation matrices 530. Each matrix may be generated at the specific reference position within the associated worksite portion or segment 520 as illustrated above. These matrices may thus be segment-specific, and applied for converting coordinates between the worksite models within the segment. As illustrated, there may be more than one transformation matrix for each segment.

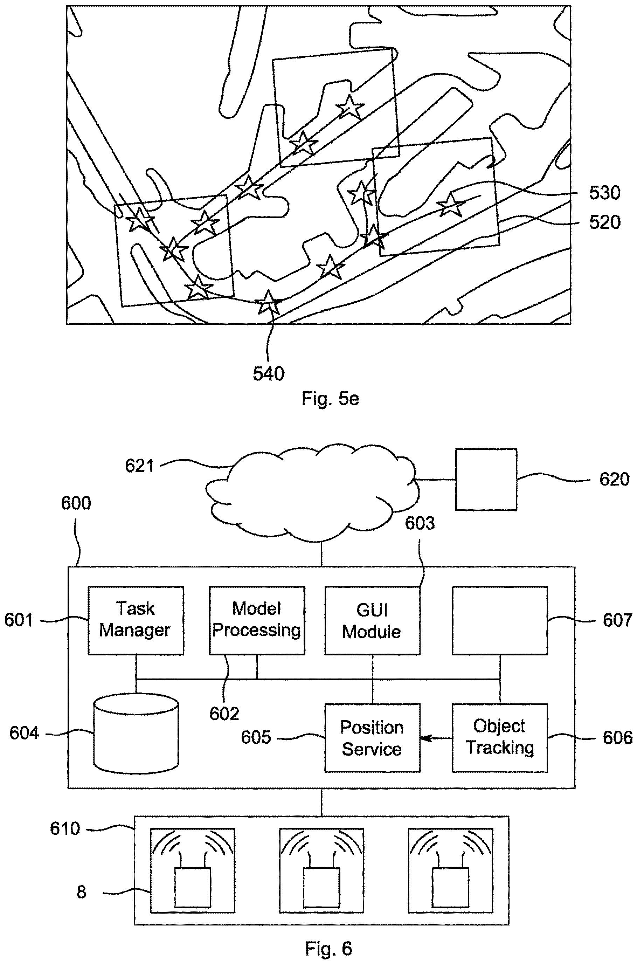

As further illustrated in Fig. 5e, a trajectory 540 (of a set of trajectory points) may be defined in the first worksite model.

In some embodiments, transformation matrix interpolation or adaptation may be performed based on the first position or the updated position of the mining vehicle. Based on the position, the transformation matrix may be interpolated based on (and between) two predefined transformation matrices closest to the position of the mining vehicle. Thus, the closest transformation matrices may be selected in block 220, and block 230 may comprise matrix interpolation to determine the coordinate transformation. Matrix interpolation enables to further improve accuracy of the coordinate transformation, in particular if the reference points are far away from each other (for example, more than 5 meters) or if there is substantial non-linear geometric error between the worksite models. For example, matrix interpolation may be performed along the trajectory 540 based on the current position of the mining vehicle.

It is to be appreciated that various further features may be complement or differentiate at least some of the above-illustrated embodiments. For example, there may be further user interaction and/or automation functionality to monitor and control mining vehicles and operations/settings thereof.

Fig. 6 illustrates operational modules of a worksite operations control apparatus or system, such as the system 9, by which some of the present embodiments may be applied. A (worksite) server 600 may be connected to a set 610 of access nodes 8 located at the worksite to communicate with mining operations devices, such as the mining vehicle 4 to 7.

The server 600 may comprise a task manager or management module 601, which is configured to manage at least some operations at the worksite. For example, the task manager may be configured to assign tasks, such as mining tasks for a fleet of vehicles and update, send control signals to the vehicles, and/or monitor vehicle task performance and status, which may be indicated in a task management GUI.

The server 600 may comprise a model processing module 602, which may be configured to maintain one or more models of the worksite, such as the worksite map. In some embodiments, the model processing module 602 is configured to perform the method of Fig. 2. The worksite model(s) may be stored, for example, in a database or storage unit 604.

The server 600 may comprise a GUI module 603, which is configured to generate at least some display views for an operator, locally and/or remotely. In some embodiments, the GUI module is configured to generate, on the basis of the second worksite model, a GUI view indicative of 2D or 3D model of the worksite, which may also indicate current position(s) of mobile objects at the worksite, such as the mining vehicle based on the transformed coordinates.

An object tracking module 606 may be configured to track a location of mobile objects and to provide a 3D position indicator to further modules, in some embodiments a position service module 605. The position service module 605 may be configured to provide, upon request or by push transmission, mobile object position information obtained from or generated on the basis of information from the obj ect tracking 606 for relevant other modules or functions, such as the database 604, the GUI module 603, and/or remote units or systems 620.

The server 600 may comprise further module(s) 607, such as a remote monitoring process and a UI, an event processing module configured to process mine operations data, and/or a cloud dispatcher component configured to provide selected worksite information, such as vehicle monitoring information to a cloud service.

The system and server 600 may be connected to a further system 620 and/or network 621, such as a worksite management system device, a cloud service, an intermediate communications network, such as the internet, etc. The system 620 may further comprise or be connected to a further device or control unit, such as a handheld user unit, a vehicle unit, a worksite management device/system, a cloud server, a remote control and/or monitoring device/system, data analytics device/system, sensor system/device, etc.

It is to be appreciated that Fig. 6 illustrates only one example and various modifications may be applied. For example, some of the modules of the server 600 may be performed by separate devices. The object tracking 606 may be implemented as part of another module, such as the position service module 605. Further, the modules are illustrated as inter-connected, but it is to be appreciated that not all modules need to be connectable.

The system and the server 600 may be connected to the control unit 20 of a mining vehicle or another mining operations device, for which, for example, control commands may be transmitted. In an example embodiment, the control unit may be provided in each autonomously operating vehicle and be configured to control at least some autonomous operations of the vehicle on the basis of the received control commands.

An electronic device comprising electronic circuitries may be an apparatus for realizing and configured to at least some embodiments illustrated above, such as the method illustrated in connection with Fig. 2. The apparatus may be comprised in at least one computing device connected to or integrated into a control system of the mining vehicle, or a control device of the mining operations control system 9, for example, the server 600. In case of a control system of a mining vehicle, such a control system may be an intelligent on-board control system controlling operation of various sub-systems of the vehicle, such as a hydraulic system, a motor, etc. Such control systems are often distributed and include many independent modules connected by a bus system of controller area network (CAN) nodes, for example.

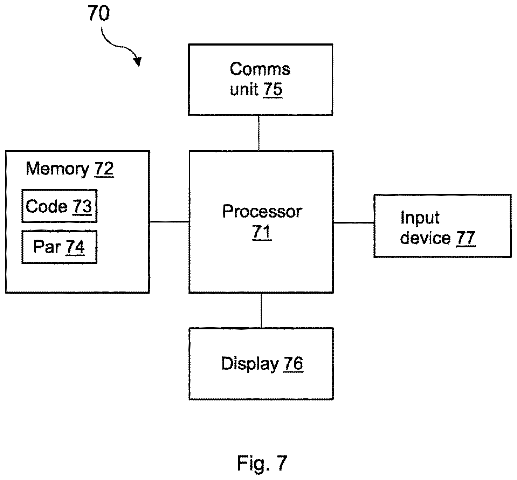

Fig. 7 illustrates a simplified example apparatus capable of supporting at least some embodiments of the present invention. Illustrated is a device 70, which may be configured to carry out at least some of the above-illustrated embodiments. In some embodiments, the device 70 comprises or implements, for example, the control unit of the mining vehicle 4-7 or the control device of the control system 9, or other module(s), functions and/or unit(s) for performing at least some of the above-illustrated embodiments. The device may be configured to perform the method of Fig. 2 and embodiments thereof.

Comprised in the device 70 is a processor 71, which may comprise, for example, a single- or multi-core processor. The processor 71 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 70 may comprise memory 72. The memory may comprise random-access memory and/or permanent memory. The memory may be at least in part accessible to the processor 71. The memory may be at least in part comprised in the processor 71. The memory may be at least in part external to the device 70 but accessible to the device. The memory 72 may be means for storing information, such as parameters 74 affecting operations of the device. The parameter information in particular may comprise parameter information affecting the mapping data processing related features, such as threshold values.

The memory 72 may be a non-transitory computer readable medium comprising computer program code 73 including computer instructions that the processor 71 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated features in the device, such as the method of Fig. 2 or embodiments thereof.

The device 70 may comprise a communications unit 75 comprising a transmitter and/or a receiver. The transmitter and the receiver may be configured to transmit and receive, respectively, for example, data and control commands within or outside the vehicle. The transmitter and/or receiver may be configured to operate in accordance with long term evolution, LTE, 3GPP new radio access technology (N-RAT), wireless local area network, WLAN, a non-terrestrial communication standard, and/or Ethernet standards, for example. The device 70 may comprise a near-field communication, NFC, transceiver. The NFC transceiver may support at least one NFC technology, such as NFC, Bluetooth, or similar technologies.

The device 70 may comprise or be connected to a UI. The UI may comprise at least one of a display 76, a speaker, an input device 77 such as a keyboard, a joystick, a touchscreen, and/or a microphone. The UI may be configured to display views on the basis of above illustrated embodiments. A user may operate the device and control at least some of above illustrated features. In some embodiments, the user may control the vehicle via the UI, for example, to manually drive the vehicle, operate a boom, change driving mode, change display views, modify parameters 74, etc.

The device 70 may further comprise and/or be connected to further units, devices and systems, such as one or more sensor devices 78, such as the scanner(s) or other sensor devices sensing environment of the device 70 or properties or mobility of the vehicle, such as wheel rotation or orientation changes.

The processor 71, the memory 72, the communications unit 75 and the UI may be interconnected by electrical leads internal to the device 70 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

The apparatus, such as the device 70 or the server 600, may be configured at least to: detect a first position of a mining vehicle with reference to a first worksite model, receive information on a plurality of transformation matrices associated with the first worksite model, select a transformation matrix associated with the first worksite model based on the first position of the mining vehicle, perform, based on the selected transformation matrix, a coordinate transformation from input coordinates indicative of a second position of the mining vehicle in the first worksite model to transformed coordinates of a second worksite model, and provide the transformed coordinates to represent the second position of the mining vehicle for performing mining automation control based on the second worksite model.

The mining vehicle may be an autonomously driving vehicle and the apparatus may be configured to provide the second position to control and/or monitor autonomous driving of the mining vehicle.

The worksite models may be underground tunnel models and the mining vehicle may be configured to determine its position based on matching scanned tunnel profile data to a reference tunnel profile indicated by the first worksite model or the second worksite model.

The first worksite model may be a 2D model and the second worksite model may be a 3D model, or vice versa. The apparatus may be configured to perform the coordinate transformation between two-dimensional and three-dimensional reference systems by the selected transformation matrix.

Each of the plurality of transformation matrices may be associated with a reference position or a reference worksite portion of the first worksite model. The apparatus may be configured to determine, to select the transformation matrix, which of the plurality of transformation matrices is associated with a reference position closest to the first position of the mining vehicle or which of the plurality of transformation matrices is associated with a reference worksite portion or area in which the first position of the mining vehicle belongs to.

The apparatus may be configured to, after providing the second position of the mining vehicle in the transformed coordinates, receive or define an updated position of the mining vehicle in the first worksite model, detect a trigger to change the transformation matrix based on the updated position of the mining vehicle, and select a new transformation matrix based on the updated position of the mining vehicle.

The apparatus may be configured to generate a transformation matrix included in the plurality of transformation matrices by:
- receiving or selecting a first worksite model portion of the first worksite model, associated with a reference position or area of the first worksite model,
- processing the first worksite model portion and the second worksite model to perform a worksite model portion matching operation to detect a second worksite model portion of the second worksite model best fitting to the first worksite model portion,
- processing coordinate values of the first worksite model portion and associated coordinate values of the second worksite model portion to determine a transformation matrix to convert coordinate values of the first worksite model portion to coordinate values of the second worksite model portion, and
- associating the transformation matrix with the reference position, portion, or area of the first worksite model.

The apparatus may be the mining vehicle or included in the mining vehicle configured to receive the input coordinates from a control device of a mining automation system. The mining vehicle may be further configured to
- apply the transformed coordinates to control autonomous driving of the mining vehicle based on the second worksite model, and/or
- define the input coordinates based on positioning the mining vehicle in the first worksite model during driving of the mining vehicle and to transmit the transformed coordinates to the control device.

The apparatus may be a control device of a mining automation system or included in such control device. The control device may be configured to control autonomous driving of a fleet of mining vehicles, the fleet comprising the mining vehicle. The control device may be further configured to:
- transmit the transformed coordinates to the mining vehicle and/or receive the input coordinates from the mining vehicle, and
- generate, based on the transformed coordinates, a graphical user interface view illustrating position of the mining vehicle in the second worksite model.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention as defined in the claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus (4, 5, 6, 7, 9, 70) for mining vehicle (4, 5, 6, 7) positioning, the apparatus comprising at least one processor (71) and at least one memory (72) storing computer program code (73) configured to, when executed by the at least one processor (71), cause the apparatus (4, 5, 6, 7, 9, 70) at least to:
- detect (200) a first position of a mining vehicle (4, 5, 6, 7) with reference to a first worksite model,
- receive (210) information on a plurality of transformation matrices (530) associated with the first worksite model,
- select (220) a transformation matrix associated with the first worksite model based on the first position of the mining vehicle (4, 5, 6, 7),
- perform (230), based on the selected transformation matrix (530), a coordinate transformation from input coordinates indicative of a second position of the mining vehicle (4, 5, 6, 7) in the first worksite model to transformed coordinates of a second worksite model, and
- provide (240) the transformed coordinates to represent the second position of the mining vehicle (4, 5, 6, 7) for performing mining automation control by a control device of a mining automation system or a control unit of a mining vehicle (4, 5, 6, 7) based on the second worksite model.

2. The apparatus (4, 5, 6, 7, 9, 70) of any preceding claim, wherein the mining vehicle (4, 5, 6, 7) is an autonomously driving vehicle and the second position is provided to control and/or monitor autonomous driving of the mining vehicle (4, 5, 6, 7).

3. The apparatus (4, 5, 6, 7, 9, 70) of any preceding claim, wherein the worksite models are underground tunnel models and the mining vehicle (4, 5, 6, 7) is configured to determine its position based on matching scanned tunnel profile data to a reference tunnel profile indicated by the first worksite model or the second worksite model.

4. The apparatus (4, 5, 6, 7, 9, 70) of any preceding claim, wherein the first worksite model is a two-dimensional model and the second worksite model is a three-dimensional model, or the first worksite model is a three-dimensional model and the second worksite model is a two-dimensional model, and the at least one memory and the computer program code are configured to, with the at least one processor, cause the apparatus to perform the coordinate transformation between two-dimensional and three-dimensional reference systems by the selected transformation matrix.

5. The apparatus (4, 5, 6, 7, 9, 70) of any preceding claim, wherein each of the plurality of transformation matrices is associated with a reference position or a reference worksite portion of the first worksite model, and the at least one memory and the computer program code are configured to, with the at least one processor, cause the apparatus to determine, to select the transformation matrix, which of the plurality of transformation matrices is associated with a reference position closest to the first position of the mining vehicle (4, 5, 6, 7) or which of the plurality of transformation matrices is associated with a reference worksite portion or area in which the first position of the mining vehicle (4, 5, 6, 7) belongs to.

6. The apparatus (4, 5, 6, 7, 9, 70) of any preceding claim, wherein the computer program code is configured to, when executed by the at least one processor, cause the apparatus to, after providing the second position of the mining vehicle (4, 5, 6, 7) in the transformed coordinates, receive or define an updated position of the mining vehicle (4, 5, 6, 7) in the first worksite model, detect a trigger to change the transformation matrix based on the updated position of the mining vehicle (4, 5, 6, 7), and select a new transformation matrix based on the updated position of the mining vehicle.

7. The apparatus (4, 5, 6, 7, 9, 70) of any preceding claim, wherein the computer program code is configured to, when executed by the at least one processor, cause the apparatus to generate a transformation matrix included in the plurality of transformation matrices by:
- receiving or selecting a first worksite model portion of the first worksite model, associated with a reference position or area of the first worksite model,
- processing the first worksite model portion and the second worksite model to perform a worksite model portion matching operation to detect a second worksite model portion of the second worksite model best fitting to the first worksite model portion,
- processing coordinate values of the first worksite model portion and associated coordinate values of the second worksite model portion to determine a transformation matrix to convert coordinate values of the first worksite model portion to coordinate values of the second worksite model portion, and
- associating the transformation matrix with the reference position, portion, or area of the first worksite model.

8. The apparatus (4, 5, 6, 7, 9, 70) of any preceding claim, wherein the apparatus is the mining vehicle (4, 5, 6, 7) configured to receive the input coordinates from a control device of a mining automation system, wherein the mining vehicle (4, 5, 6, 7) is further configured to:
- apply the transformed coordinates to control autonomous driving of the mining vehicle (4, 5, 6, 7) based on the second worksite model, and/or
- define the input coordinates based on positioning the mining vehicle (4, 5, 6, 7) in the first worksite model during driving of the mining vehicle (4, 5, 6, 7) and to transmit the transformed coordinates to the control device.

9. The apparatus (4, 5, 6, 7, 9, 70) of any preceding claim 1 to 7, wherein the apparatus is a control device of a mining automation system configured to control autonomous driving of a fleet of mining vehicles, the fleet comprising the mining vehicle (4, 5, 6, 7), wherein the control device is further configured to:
- transmit the transformed coordinates to the mining vehicle (4, 5, 6, 7) and/or receive the input coordinates from the mining vehicle (4, 5, 6, 7), and
- generate, based on the transformed coordinates, a graphical user interface view illustrating position of the mining vehicle (4, 5, 6, 7) in the second worksite model.

10. A method for mining vehicle (4, 5, 6, 7) positioning, the method comprising:
- detecting (200) a first position of a mining vehicle (4, 5, 6, 7) with reference to a first worksite model,
- receiving (210) information on a plurality of transformation matrices associated with the first worksite model,
- selecting (220) a transformation matrix associated with the first worksite model based on the first position of the mining vehicle (4, 5, 6, 7),
- performing (230), based on the selected transformation matrix, a coordinate transformation from input coordinates indicative of a second position of the mining vehicle (4, 5, 6, 7) in the first worksite model to transformed coordinates of a second worksite model, and
- providing (240) the transformed coordinates to represent the second position of the mining vehicle (4, 5, 6, 7) for performing mining automation control by a control device of a mining automation system or a control unit of a mining vehicle (4, 5, 6, 7) based on the second worksite model.

11. The method of claim 10, wherein the mining vehicle (4, 5, 6, 7) is an autonomously driving vehicle, the worksite models are underground tunnel models, the mining vehicle (4, 5, 6, 7) determines its position based on matching scanned tunnel profile data to a reference tunnel profile indicated by the first worksite model or the second worksite model and the second position is provided to control and/or monitor autonomous driving of the mining vehicle (4, 5, 6, 7).

12. The method of claim 10 or 11, wherein each of the plurality of transformation matrices is associated with a reference position or a reference worksite portion of the first worksite model, and the method further comprises: determining, to select the transformation matrix, which of the plurality of transformation matrices is associated with a reference position closest to the first position of the mining vehicle (4, 5, 6, 7) or which of the plurality of transformation matrices is associated with a reference worksite portion or area in which the first position of the mining vehicle (4, 5, 6, 7) belongs to.

13. The method of any preceding claim 10 to 12, comprising: after providing the second position of the mining vehicle (4, 5, 6, 7) in the transformed coordinates, receiving or defining an updated position of the mining vehicle (4, 5, 6, 7) in the first worksite model, detecting a trigger to change the transformation matrix based on the updated position of the mining vehicle (4, 5, 6, 7), and selecting a new transformation matrix based on the updated position of the mining vehicle (4, 5, 6, 7).

14. The method of any preceding claim 10 to 13, wherein the mining vehicle (4, 5, 6, 7) receives the input coordinates from a control device of a mining automation system and:
- applies the transformed coordinates to control autonomous driving of the mining vehicle (4, 5, 6, 7) based on the second worksite model, and/or
- defines the input coordinates based on positioning the mining vehicle (4, 5, 6, 7) in the first worksite model during driving of the mining vehicle (4, 5, 6, 7) and to transmit the transformed coordinates to the control device.

15. A computer program comprising code (73) configured to, when executed in a data processing apparatus, cause the apparatus to perform the method of any one of claims 10 to 14.

## Patentansprüche

1. Einrichtung (4, 5, 6, 7, 9, 70) zur Positionierung von Bergbaufahrzeugen (4, 5, 6, 7), wobei die Einrichtung mindestens einen Prozessor (71) und mindestens einen Speicher (72) umfasst, in dem Computerprogrammcode (73) gespeichert ist, der dazu konfiguriert ist, wenn er von dem mindestens einen Prozessor (71) ausgeführt wird, die Einrichtung (4, 5, 6, 7, 9, 70) mindestens zu Folgendem zu veranlasst:
- Erfassen (200) einer ersten Position eines Bergbaufahrzeugs (4, 5, 6, 7) in Bezug auf ein erstes Baustellenmodell,
- Empfangen (210) von Informationen über eine Vielzahl von Transformationsmatrizen (530), die dem ersten Baustellenmodell zugeordnet sind,
- Auswählen (220) einer Transformationsmatrix, die dem ersten Baustellenmodell zugeordnet ist, basierend auf der ersten Position des Bergbaufahrzeugs (4, 5, 6, 7),
- Durchführen (230) einer Koordinatentransformation von Eingabekoordinaten, die eine zweite Position des Bergbaufahrzeugs (4, 5, 6, 7) im ersten Baustellenmodell angeben, in transformierte Koordinaten eines zweiten Baustellenmodells, basierend auf der ausgewählten Transformationsmatrix (530), und
- Bereitstellen (240) der transformierten Koordinaten, um die zweite Position des Bergbaufahrzeugs (4, 5, 6, 7) zum Durchführen einer Bergbauautomatisierungssteuerung durch eine Steuervorrichtung eines Bergbauautomatisierungssystems oder eine Steuereinheit eines Bergbaufahrzeugs (4, 5, 6, 7) basierend auf dem zweiten Baustellenmodell darzustellen.

2. Einrichtung (4, 5, 6, 7, 9, 70) nach einem vorstehenden Anspruch, wobei das Bergbaufahrzeug (4, 5, 6, 7) ein autonom fahrendes Fahrzeug ist und die zweite Position bereitgestellt wird, um autonomes Fahren des Bergbaufahrzeugs (4, 5, 6, 7) zu steuern und/oder zu überwachen.

3. Einrichtung (4, 5, 6, 7, 9, 70) nach einem vorstehenden Anspruch, wobei die Baustellenmodelle unterirdische Tunnelmodelle sind und das Bergbaufahrzeug (4, 5, 6, 7) dazu konfiguriert ist, seine Position basierend auf einem Abgleich abgetasteter Tunnelprofildaten mit einem Referenztunnelprofil zu bestimmen, das durch das erste Baustellenmodell oder das zweite Baustellenmodell angegeben wird.

4. Einrichtung (4, 5, 6, 7, 9, 70) nach einem vorstehenden Anspruch, wobei das erste Baustellenmodell ein zweidimensionales Modell ist und das zweite Baustellenmodell ein dreidimensionales Modell ist, oder das erste Baustellenmodell ein dreidimensionales Modell ist und das zweite Baustellenmodell ein zweidimensionales Modell ist, und der mindestens eine Speicher und der Computerprogrammcode dazu konfiguriert sind, zusammen mit dem mindestens einem Prozessor die Einrichtung zu veranlassen, die Koordinatentransformation zwischen zweidimensionalen und dreidimensionalen Referenzsystemen mittels der ausgewählten Transformationsmatrix durchzuführen.

5. Einrichtung (4, 5, 6, 7, 9, 70) nach einem vorstehenden Anspruch, wobei jede der Vielzahl von Transformationsmatrizen einer Referenzposition oder einem Referenzbaustellenabschnitt des ersten Baustellenmodells zugeordnet ist und der mindestens eine Speicher und der Computerprogrammcode dazu konfiguriert sind, zusammen mit dem mindestens einem Prozessor die Einrichtung zu veranlassen, zu bestimmen, um die Transformationsmatrix auszuwählen, welche der Vielzahl von Transformationsmatrizen einer Referenzposition zugeordnet ist, die der ersten Position des Bergbaufahrzeugs (4, 5, 6, 7) am nächsten liegt, oder welche der Vielzahl von Transformationsmatrizen einem Referenzbaustellenabschnitt oder -bereich zugeordnet ist, zu dem die erste Position des Bergbaufahrzeugs (4, 5, 6, 7) gehört.

6. Einrichtung (4, 5, 6, 7, 9, 70) nach einem vorstehenden Anspruch, wobei der Computerprogrammcode dazu konfiguriert ist, wenn er von dem mindestens einen Prozessor ausgeführt wird, die Einrichtung zu veranlassen, nach Bereitstellen der zweiten Position des Bergbaufahrzeugs (4, 5, 6, 7) in den transformierten Koordinaten, eine aktualisierte Position des Bergbaufahrzeugs (4, 5, 6, 7) im ersten Baustellenmodell zu empfangen oder zu definieren, einen Auslöser zum Ändern der Transformationsmatrix basierend auf der aktualisierten Position des Bergbaufahrzeugs (4, 5, 6, 7) zu erfassen und eine neue Transformationsmatrix basierend auf der aktualisierten Position des Bergbaufahrzeugs auszuwählen.

7. Einrichtung (4, 5, 6, 7, 9, 70) nach einem vorstehenden Anspruch, wobei der Computerprogrammcode dazu konfiguriert ist, wenn er von dem mindestens einen Prozessor ausgeführt wird, die Einrichtung zu veranlassen, eine in der Vielzahl von Transformationsmatrizen beinhaltete Transformationsmatrix durch Folgendes zu erzeugen:
- Empfangen oder Auswählen eines ersten Baustellenmodellabschnitts des ersten Baustellenmodells, der einer Referenzposition oder einem Referenzbereich des ersten Baustellenmodells zugeordnet ist,
- Verarbeiten des ersten Baustellenmodellabschnitts und des zweiten Baustellenmodells, um eine Baustellenmodellabschnittabgleichoperation durchzuführen, um einen zweiten Baustellenmodellabschnitt des zweiten Baustellenmodells zu erfassen, der am besten zum ersten Baustellenmodellabschnitt passt,
- Verarbeiten von Koordinatenwerten des ersten Baustellenmodellabschnitts und zugeordneten Koordinatenwerten des zweiten Baustellenmodellabschnitts, um eine Transformationsmatrix zum Umwandeln von Koordinatenwerten des ersten Baustellenmodellabschnitts in Koordinatenwerte des zweiten Baustellenmodellabschnitts zu bestimmen, und
- Zuordnen der Transformationsmatrix zur Referenzposition, zum Referenzabschnitt oder zum Referenzbereich des ersten Baustellenmodells.

8. Einrichtung (4, 5, 6, 7, 9, 70) nach einem vorstehenden Anspruch, wobei die Einrichtung das Bergbaufahrzeug (4, 5, 6, 7) ist, das dazu konfiguriert ist, die Eingabekoordinaten von einer Steuervorrichtung eines Bergbauautomatisierungssystems zu empfangen, wobei das Bergbaufahrzeug (4, 5, 6, 7) weiter zu Folgendem konfiguriert ist:
- Anwenden der transformierten Koordinaten, um autonomes Fahren des Bergbaufahrzeugs (4, 5, 6, 7) basierend auf dem zweiten Baustellenmodell zu steuern, und/oder
- Definieren der Eingangskoordinaten basierend auf einer Positionierung des Bergbaufahrzeugs (4, 5, 6, 7) im ersten Baustellenmodell während einer Fahrt des Bergbaufahrzeugs (4, 5, 6, 7), und Übertragen der transformierten Koordinaten an die Steuervorrichtung.

9. Einrichtung (4, 5, 6, 7, 9, 70) nach einem vorstehenden Anspruch 1 bis 7, wobei die Einrichtung eine Steuervorrichtung eines Bergbauautomatisierungssystems ist, das dazu konfiguriert ist, autonomes Fahren einer Flotte von Bergbaufahrzeugen zu steuern, wobei die Flotte das Bergbaufahrzeug (4, 5, 6, 7) umfasst, wobei die Steuervorrichtung weiter für Folgendes konfiguriert ist:
- Übertragen der transformierten Koordinaten an das Bergbaufahrzeug (4, 5, 6, 7) und/oder Empfangen der Eingabekoordinaten vom Bergbaufahrzeug (4, 5, 6, 7), und
- Erzeugen, basierend auf den transformierten Koordinaten, einer grafischen Benutzeroberflächenansicht, die eine Position des Bergbaufahrzeugs (4, 5, 6, 7) im zweiten Baustellenmodell veranschaulicht.

10. Verfahren zur Positionierung von Bergbaufahrzeugen (4, 5, 6, 7), wobei das Verfahren umfasst:
- Erfassen (200) einer ersten Position eines Bergbaufahrzeugs (4, 5, 6, 7) in Bezug auf ein erstes Baustellenmodell,
- Empfangen (210) von Informationen über eine Vielzahl von Transformationsmatrizen, die dem ersten Baustellenmodell zugeordnet sind,
- Auswählen (220) einer Transformationsmatrix, die dem ersten Baustellenmodell zugeordnet ist, basierend auf der ersten Position des Bergbaufahrzeugs (4, 5, 6, 7),
- Durchführen (230) einer Koordinatentransformation von Eingabekoordinaten, die eine zweite Position des Bergbaufahrzeugs (4, 5, 6, 7) im ersten Baustellenmodell angeben, in transformierte Koordinaten eines zweiten Baustellenmodells, basierend auf der ausgewählten Transformationsmatrix, und
- Bereitstellen (240) der transformierten Koordinaten, um die zweite Position des Bergbaufahrzeugs (4, 5, 6, 7) zum Durchführen einer Bergbauautomatisierungssteuerung durch eine Steuervorrichtung eines Bergbauautomatisierungssystems oder eine Steuereinheit eines Bergbaufahrzeugs (4, 5, 6, 7) basierend auf dem zweiten Baustellenmodell darzustellen.

11. Verfahren nach Anspruch 10, wobei das Bergbaufahrzeug (4, 5, 6, 7) ein autonom fahrendes Fahrzeug ist, die Baustellenmodelle unterirdische Tunnelmodelle sind, das Bergbaufahrzeug (4, 5, 6, 7) seine Position basierend auf einem Abgleich abgetasteter Tunnelprofildaten mit einem Referenztunnelprofil bestimmt, das durch das erste Baustellenmodell oder das zweite Baustellenmodell angegeben wird, und die zweite Position bereitgestellt wird, um autonomes Fahren des Bergbaufahrzeugs (4, 5, 6, 7) zu steuern und/oder zu überwachen.

12. Verfahren nach Anspruch 10 oder 11, wobei jede der Vielzahl von Transformationsmatrizen einer Referenzposition oder einem Referenzbaustellenabschnitt des ersten Baustellenmodells zugeordnet ist, und das Verfahren weiter Folgendes umfasst: Bestimmen, um die Transformationsmatrix auszuwählen, welche der Vielzahl von Transformationsmatrizen einer Referenzposition zugeordnet ist, die der ersten Position des Bergbaufahrzeugs (4, 5, 6, 7) am nächsten liegt, oder welche der Vielzahl von Transformationsmatrizen einem Referenzbaustellenabschnitt oder -bereich zugeordnet ist, zu dem die erste Position des Bergbaufahrzeugs (4, 5, 6, 7) gehört.

13. Verfahren nach einem vorstehenden Anspruch 10 bis 12, umfassend: nach Bereitstellen der zweiten Position des Bergbaufahrzeugs (4, 5, 6, 7) in den transformierten Koordinaten, Empfangen oder Definieren einer aktualisierten Position des Bergbaufahrzeugs (4, 5, 6, 7) im ersten Baustellenmodell, Erfassen eines Auslösers zum Ändern der Transformationsmatrix basierend auf der aktualisierten Position des Bergbaufahrzeugs (4, 5, 6, 7) und Auswählen einer neuen Transformationsmatrix basierend auf der aktualisierten Position des Bergbaufahrzeugs (4, 5, 6, 7).

14. Verfahren nach einem vorstehenden Anspruch 10 bis 13, wobei das Bergbaufahrzeug (4, 5, 6, 7) die Eingabekoordinaten von einer Steuervorrichtung eines Bergbauautomatisierungssystems empfängt und:
- die transformierten Koordinaten anwendet, um autonomes Fahren des Bergbaufahrzeugs (4, 5, 6, 7) basierend auf dem zweiten Baustellenmodell zu steuern, und/oder
- die Eingangskoordinaten basierend auf einer Positionierung des Bergbaufahrzeugs (4, 5, 6, 7) im ersten Baustellenmodell während einer Fahrt des Bergbaufahrzeugs (4, 5, 6, 7) definiert und die transformierten Koordinaten an die Steuervorrichtung überträgt.

15. Computerprogramm, das Code (73) umfasst, der dazu konfiguriert ist, wenn er in einer Datenverarbeitungseinrichtung ausgeführt wird, die Einrichtung dazu zu veranlassen, das Verfahren nach einem der Ansprüche 10 bis 14 durchzuführen.

## Revendications

1. Appareil (4, 5, 6, 7, 9, 70) pour le positionnement de véhicule minier (4, 5, 6, 7), l'appareil comprenant au moins un processeur (71) et au moins une mémoire (72) stockant un code de programme informatique (73) configuré pour, lorsqu'il est exécuté par le au moins un processeur (71), amener l'appareil (4, 5, 6, 7, 9, 70) au moins à :
- détecter (200) une première position d'un véhicule minier (4, 5, 6, 7) en référence à un premier modèle de chantier,
- recevoir (210) des informations sur une pluralité de matrices de transformation (530) associées au premier modèle de chantier,
- sélectionner (220) une matrice de transformation associée au premier modèle de chantier sur la base de la première position du véhicule minier (4, 5, 6, 7),
- effectuer (230), sur la base de la matrice de transformation sélectionnée (530), une transformation de coordonnées de coordonnées d'entrée indiquant une seconde position du véhicule minier (4, 5, 6, 7) dans le premier modèle de chantier en des coordonnées transformées d'un second modèle de chantier, et
- fournir (240) les coordonnées transformées pour représenter la seconde position du véhicule minier (4, 5, 6, 7) pour effectuer une commande d'automatisation minière par un dispositif de commande d'un système d'automatisation minière ou une unité de commande d'un véhicule minier (4, 5, 6, 7) sur la base du second modèle de chantier.

2. Appareil (4, 5, 6, 7, 9, 70) selon une quelconque revendication précédente, dans lequel le véhicule minier (4, 5, 6, 7) est un véhicule à conduite autonome et la seconde position est fournie pour commander et/ou surveiller la conduite autonome du véhicule minier (4, 5, 6, 7).

3. Appareil (4, 5, 6, 7, 9, 70) selon une quelconque revendication précédente, dans lequel les modèles de chantier sont des modèles de tunnel souterrain et le véhicule minier (4, 5, 6, 7) est configuré pour déterminer sa position sur la base de la correspondance de données de profil de tunnel numérisées avec un profil de tunnel de référence indiqué par le premier modèle de chantier ou le second modèle de chantier.

4. Appareil (4, 5, 6, 7, 9, 70) selon une quelconque revendication précédentes, dans lequel le premier modèle de chantier est un modèle bidimensionnel et le second modèle de chantier est un modèle tridimensionnel, ou le premier modèle de chantier est un modèle tridimensionnel et le second modèle de chantier est un modèle bidimensionnel, et la au moins une mémoire et le code de programme informatique sont configurés pour, avec le au moins un processeur, amener l'appareil à effectuer la transformation de coordonnées entre des systèmes de référence bidimensionnels et tridimensionnels par la matrice de transformation sélectionnée.

5. Appareil (4, 5, 6, 7, 9, 70) selon une quelconque revendication précédente, dans lequel chacune de la pluralité de matrices de transformation est associée à une position de référence ou à une partie de chantier de référence du premier modèle de chantier, et la au moins une mémoire et le code de programme informatique sont configurés pour, avec le au moins un processeur, amener l'appareil à déterminer, pour sélectionner la matrice de transformation, laquelle de la pluralité de matrices de transformation est associée à la position de référence la plus proche de la première position du véhicule minier (4, 5, 6, 7) ou laquelle de la pluralité de matrices de transformation est associée à une partie, ou une zone, de chantier de référence à laquelle appartient la première position du véhicule minier (4, 5, 6, 7).

6. Appareil (4, 5, 6, 7, 9, 70) selon une quelconque revendication précédente, dans lequel le code de programme informatique est configuré pour, lorsqu'il est exécuté par le au moins un processeur, amener l'appareil, après avoir fourni la seconde position du véhicule minier (4, 5, 6, 7) dans les coordonnées transformées, à recevoir ou définir une position mise à jour du véhicule minier (4, 5, 6, 7) dans le premier modèle de chantier, détecter un déclencheur pour modifier la matrice de transformation sur la base de la position mise à jour du véhicule minier (4, 5, 6, 7), et sélectionner une nouvelle matrice de transformation sur la base de la position mise à jour du véhicule minier.

7. Appareil (4, 5, 6, 7, 9, 70) selon une quelconque revendication précédente, dans lequel le code de programme informatique est configuré pour, lorsqu'il est exécuté par le au moins un processeur, amener l'appareil à générer une matrice de transformation incluse dans la pluralité de matrices de transformation par :
- réception ou sélection d'une première partie de modèle de chantier du premier modèle de chantier, associée à une position, ou une zone, de référence du premier modèle de chantier,
- traitement de la première partie de modèle de chantier et du second modèle de chantier pour effectuer une opération de mise en correspondance de partie de modèle de chantier pour détecter une seconde partie de modèle de chantier du second modèle de chantier s'adaptant le mieux à la première partie de modèle de chantier,
- traitement de valeurs de coordonnées de la première partie de modèle de chantier et de valeurs de coordonnées associées de la seconde partie de modèle de chantier pour déterminer une matrice de transformation pour convertir des valeurs de coordonnées de la première partie de modèle de chantier en valeurs de coordonnées de la seconde partie de modèle de chantier, et
- association de la matrice de transformation à la position, la partie ou la zone de référence du premier modèle de chantier.

8. Appareil (4, 5, 6, 7, 9, 70) selon une quelconque revendication précédente, dans lequel l'appareil est le véhicule minier (4, 5, 6, 7) configuré pour recevoir les coordonnées d'entrée en provenance d'un dispositif de commande d'un système d'automatisation minière, dans lequel le véhicule minier (4, 5, 6, 7) est en outre configuré pour :
- appliquer les coordonnées transformées pour commander la conduite autonome du véhicule minier (4, 5, 6, 7) sur la base du second modèle de chantier, et/ou
- définir les coordonnées d'entrée sur la base du positionnement du véhicule minier (4, 5, 6, 7) dans le premier modèle de chantier pendant la conduite du véhicule minier (4, 5, 6, 7) et transmettre les coordonnées transformées au dispositif de commande.

9. Appareil (4, 5, 6, 7, 9, 70) selon l'une quelconque des revendications 1 à 7 précédentes, dans lequel l'appareil est un dispositif de commande d'un système d'automatisation minière configuré pour commander la conduite autonome d'une flotte de véhicules miniers, la flotte comprenant le véhicule minier (4, 5, 6, 7), dans lequel le dispositif de commande est en outre configuré pour :
- transmettre les coordonnées transformées au véhicule minier (4, 5, 6, 7) et/ou recevoir les coordonnées d'entrée du véhicule minier (4, 5, 6, 7), et
- générer, sur la base des coordonnées transformées, une vue d'interface utilisateur graphique illustrant une position du véhicule minier (4, 5, 6, 7) dans le second modèle de chantier.

10. Procédé de positionnement de véhicule minier (4, 5, 6, 7), le procédé comprenant :
- la détection (200) d'une première position d'un véhicule minier (4, 5, 6, 7) en référence à un premier modèle de chantier,
- la réception (210) d'informations sur une pluralité de matrices de transformation associées au premier modèle de chantier,
- la sélection (220) d'une matrice de transformation associée au premier modèle de chantier sur la base de la première position du véhicule minier (4, 5, 6, 7),
- la réalisation (230), sur la base de la matrice de transformation sélectionnée, d'une transformation de coordonnées de coordonnées d'entrée indiquant une seconde position du véhicule minier (4, 5, 6, 7) dans le premier modèle de chantier en coordonnées transformées d'un second modèle de chantier, et
- la fourniture (240) des coordonnées transformées pour représenter la seconde position du véhicule minier (4, 5, 6, 7) pour effectuer une commande d'automatisation minière par un dispositif de commande d'un système d'automatisation minière ou une unité de commande d'un véhicule minier (4, 5, 6, 7) sur la base du second modèle de chantier.

11. Procédé selon la revendication 10, dans lequel le véhicule minier (4, 5, 6, 7) est un véhicule à conduite autonome, les modèles de chantier sont des modèles de tunnel souterrain, le véhicule minier (4, 5, 6, 7) détermine sa position sur la base de la correspondance de données de profil de tunnel numérisées avec un profil de tunnel de référence indiqué par le premier modèle de chantier ou le second modèle de chantier et la seconde position est fournie pour commander et/ou surveiller la conduite autonome du véhicule minier (4, 5, 6, 7).

12. Procédé selon la revendication 10 ou 11, dans lequel chacune de la pluralité de matrices de transformation est associée à une position de référence ou à une partie de chantier de référence du premier modèle de chantier et le procédé comprend en outre : la détermination, pour sélectionner la matrice de transformation, de la matrice de transformation parmi la pluralité de matrices de transformation qui est associée à une position de référence la plus proche de la première position du véhicule minier (4, 5, 6, 7) ou de la matrice de transformation parmi la pluralité de matrices de transformation qui est associée à une partie, ou une zone, de chantier de référence à laquelle appartient la première position du véhicule minier (4, 5, 6, 7).

13. Procédé selon l'une quelconque des revendications 10 à 12 précédentes, comprenant : après avoir fourni la seconde position du véhicule minier (4, 5, 6, 7) dans les coordonnées transformées, la réception ou la définition d'une position mise à jour du véhicule minier (4, 5, 6, 7) dans le premier modèle de chantier, la détection d'un déclencheur pour modifier la matrice de transformation sur la base de la position mise à jour du véhicule minier (4, 5, 6, 7) et la sélection d'une nouvelle matrice de transformation sur la base de la position mise à jour du véhicule minier (4, 5, 6, 7).

14. Procédé selon l'une quelconque des revendications 10 à 13 précédentes, dans lequel le véhicule minier (4, 5, 6, 7) reçoit les coordonnées d'entrée en provenance d'un dispositif de commande d'un système d'automatisation minière et :
- applique les coordonnées transformées pour commander la conduite autonome du véhicule minier (4, 5, 6, 7) sur la base du second modèle de chantier, et/ou
- définit les coordonnées d'entrée sur la base du positionnement du véhicule minier (4, 5, 6, 7) dans le premier modèle de chantier pendant la conduite du véhicule minier (4, 5, 6, 7) et transmet les coordonnées transformées au dispositif de commande.

15. Programme informatique comprenant un code (73) configuré pour, lorsqu'il est exécuté dans un appareil de traitement de données, amener l'appareil à réaliser le procédé selon l'une quelconque des revendications 10 à 14.
